# EUROPEAN PATENT APPLICATION

(11) **EP 0 621 527 A1**
(43) Date of publication of application: **26.10.1994**
(21) Application number: 94302243.4
(22) Date of filing: 29.03.1994
(51) Int. Cl.: G06F 3/023, G06F 3/033, G06F 9/44

(54) **Hierarchically grouped macroinstructions for a graphical user interface**

(30) Priority: 16.04.1993 US 48439
(71) Applicant: Hewlett-Packard Company, Palo Alto, California 94304 (US)
(72) Inventor: Dehart, Daniel L., Loveland, CO 80538 (US)
(74) Representative: Colgan, Stephen James

(57) **Abstract**

A system (200) and method for creating hierarchically grouped macroinstructions (macros) is presented. The present invention brings together macros (310) and icons (227) to provide a simplified view of the system's components and their interrelationships. In particular, macros are created and grouped in a hierarchy to provide the operator with the simplified view. The information in the macro is ordered hierarchically with macros appearing at the top level. The operations (240) in a macro appear at the second level with each operation connected to its parent macro with a line. The chronological execution of the component operations is shown by the order they appear below the parent macro. Each operation also has associated parameters (242) such as a source and, possibly, a destination device. These devices (244, 246, 248) appear as a third level that is connected to the parent operation also with a line. The macros, operations and operation parameters are represented by icons. An icon at any level may be expanded or collapsed to visually give more or less information about the overall set of macros.

## Description

### FIELD OF THE INVENTION

The present invention relates generally to graphical user interface systems with sets of data and utility operations and more particularly to hierarchically grouped macroinstructions and a method for displaying these macroinstructions as computer icons within a graphical user interface.

### BACKGROUND OF THE INVENTION

Data management systems provide computer developers, or operators, with the capability to query, edit and/or manipulate large databases using sets of data movement operations and utility operations. These operations can be grouped into logical units known as macroinstructions, or macros. A macro can be either a series of operations grouped together to be performed consecutively or a single utility function. The number of operations within a macro is unlimited. A typical data management system will have several tens of operator-defined macros. Thus, the number of total operations will be considerable.

Each operation can have one or more associated parameters which are typically indicative of physical items within the computer system to be manipulated by its parent operation. For example, a initiate-disk-drive operation will have at least one parameter-- disk drive identifier-- to indicate exactly which disk drive will be initiated. While there is no limit on the number of parameters used by a single operation, the average is probably two parameters per operation. Thus, a given data management system will typically have a large amount of information contained in its set of macros.

Generally, the information represented by the system macros is not organized in any logical manner. That is, an operator may obtain a list of the system macros, but the operations and parameters within the macro will be shielded from the operator unless each individual macro is accessed, or opened. One limitation with this configuration is that the lack of organization hinders an operator who needs to review and/or edit the macros within the data management system. The operator's task is difficult and time-consuming given the voluminous amount of information. Simple edits, such as changing a parameter, within an operation can be difficult without knowing how the change will affect other operations within that same macro and operations from other macros. Furthermore, time can be spent simply accessing the information since there is no simplified view of the system's macros.

Another feature of some data management systems is the icon. Icons are provided to represent objects associated with the system. For instance, a tape drive connected to the system can be represented by a tape drive icon. Use of icons within a user interface screen generally displays a more organized view. The amount of information displayed by an icon occupies less screen space than the associated description.

Icons may facilitate object manipulations. Icons known in the art can initiate operations when accessed. U.S. Patent 5,140,677, "Computer User Interface With Window Title Bar Mini-Icons," describes icons which remain active so that they may be used in direct manipulation operations, such as printing a document.

### SUMMARY OF THE INVENTION

The present invention provides a system and method for creating hierarchically grouped macroinstructions (macros). The present invention brings together macros and icons to provide a simplified view of the system's components and their interrelationships. In particular, macros are created via a record function. The record function is a menu-driven process by which operator keystrokes and other inputs (e.g., mouse manipulations) are collected into a buffer until the function is terminated. Once stopped, the record function creates the macro. These macros are then grouped to provide the operator with the simplified view.

The information in the macro is ordered hierarchically with macros appearing at the top level. The operations in a macro appear at the second level with each operation connected to its parent macro with a line. The chronological execution of the component operations is shown by the order they appear below the parent macro. That is, the operation which will be executed first is displayed above all succeeding operations.

Each operation also has associated parameters such as a source and, possibly, a destination device. These devices appear as a third level that is connected to the parent operation also with a line. The macros, operations and operation parameters are represented by icons. An icon at any level may be expanded or collapsed to visually give more or less information about the overall set of macros.

One advantage of the present invention is the logical organization of the macros. This yields a simplified view of the system's macros via hierarchical grouping and facilitates operator review and/or edit of the macros.

### BRIEF DESCRIPTION OF THE DRAWINGS

FIG. 1 shows a block diagram of a computer system incorporating the present invention.

FIG. 2 shows a system for creating hierarchically grouped macroinstructions.

FIG. 3 shows a representative hierarchy of a single macro.

FIG. 4 shows a flow diagram of a preferred method for creating a macro.

FIG. 5 shows a more detailed flow diagram of the method for creating the macro.

### DETAILED DESCRIPTION OF THE PREFERRED EMBODIMENT

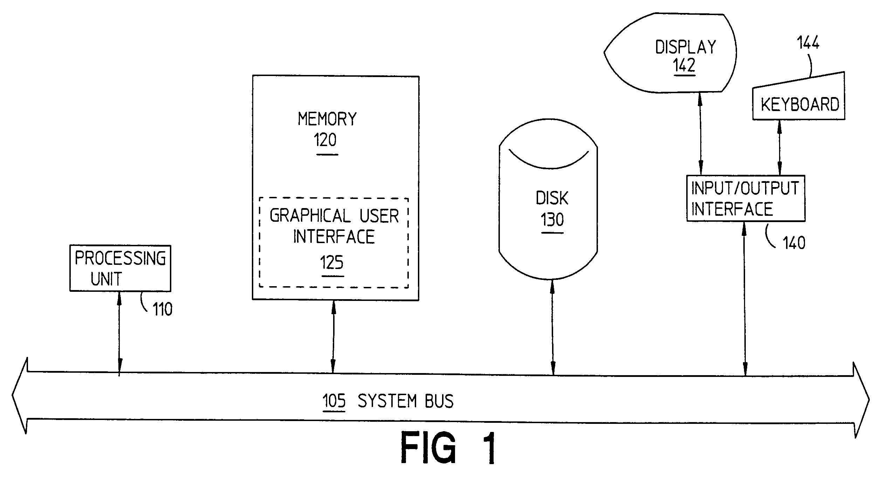

FIG. 1 shows a block diagram of a computer system incorporating the present invention. A processing unit 110 is the heart of the computer system, controlling the other components through a system bus 105. Memory 120 is provided for programming tasks and data storage. One task which is included in memory 120 is a graphical user interface 125 which will be discussed more fully below. A disk 130 is used by the system for storing data associated with the graphical user interface 125. And input/output interface controls communications between the system bus 105 and a display 142 and keyboard 144. The display 142 is provided to output text and graphical information to a user. The keyboard 144 allows the user to input data to the computer system.

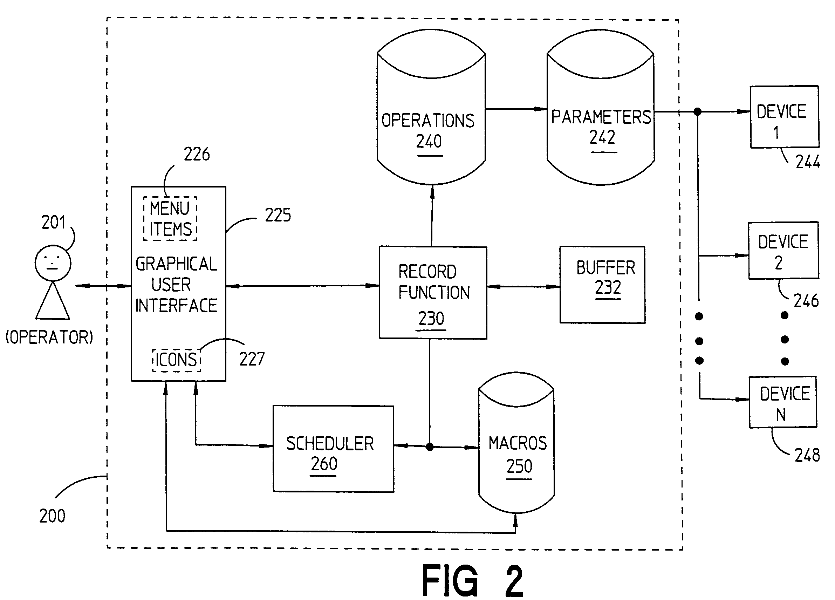

FIG. 2 shows a system for creating hierarchically grouped macros. An operator 201 interacts with the system 200 through a user interface 225. The user interface 225 controls information flow between the system 200 and the operator 201 by providing interactive windows. In a preferred embodiment, the user interface is Microsoft Windows, available from Microsoft Corporation, One Microsoft Way, Redmond, WA 98052. Other general purpose user interfaces may be used, with slight modifications to the system, without departing from the spirit and scope of the present invention.

Menu items 226 are just one part of the user interface 225 to facilitate operator interaction. One item within menu items 226 is a start recording option (not shown). Once the operator selects the start recording option, a recording function 230 is initiated and the operator is placed in a create-macro mode whereby each keystroke and/or operator action (e.g., mouse manipulations) is saved to a buffer 232. Other operator input actions may be used in addition to keystrokes and mouse manipulations, such as light pen movements and voice commands, without departing from the spirit and scope of the present invention.

The operator may then select any number of the available system operations 240. If one or more parameters are required for the selected operation, the system 200 will prompt the operator to select a parameter from the available system parameters file 242. While a parameter may be independent of the system 200, typically the parameter will represent a device attached to the system 200 such as Device A 244, Device B 246 or Device N 248. File 242 links these available devices 244, 246, 248 to the system 200. These devices may be disk drives, printers, scanners or any other system peripheral.

A feature of the present invention is built-in error checking. For example, if the operator selects an operation currently not available from the available system operations 230, the operator will be notified. Likewise, if the operator enters a parameter for a selected operation that is not from the available parameters file 242, such as a nonexistent device, an error message is displayed.

As the operator selects desired operations for the macro being created, the recording function 230 is storing each keystroke to a buffer 232. The buffer 232 stores the keystrokes using a first-in-first-out scheme so that when creation of the macro is finished, those operations that were selected first will appear before subsequent operations within that same macro. When the operator is finished creating the macro, a stop recording item (not shown) is selected from the menu items 226. Once a name is assigned to the macro by the operator, the information which was being stored into the buffer 232 can either be (1) immediately executed via the user interface 225; (2) placed into a macros file 250; or (3) attached to the scheduler 260 for timed-execution.

An icon controller 227, another part of the user interface 225, is used to display and/or execute the created macro. Since each level of the macro (i.e., macro, operations, parameters) can be represented by icons, the operator may manipulate the particular icon to execute or review the macro and its contents.

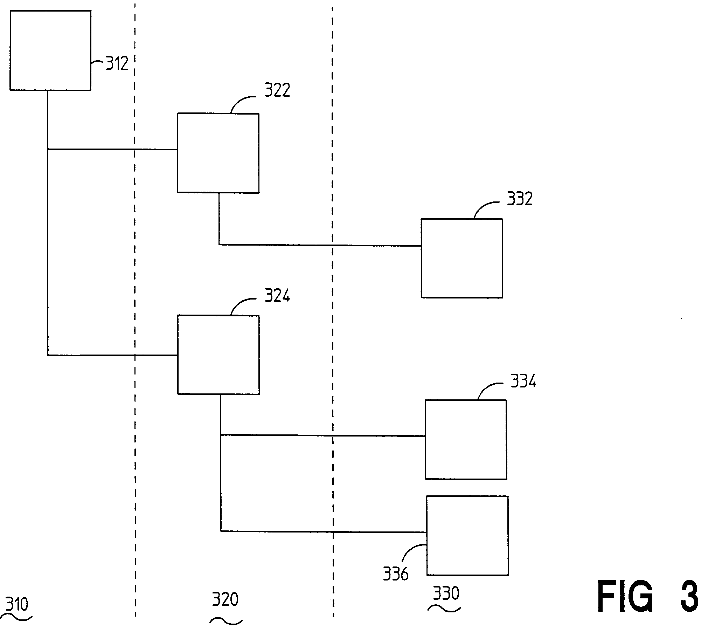

FIG. 3 shows a representative hierarchy of a single macro which is divided into three levels: the macro level 310, the operations level 320 and the parameters level 330. Each level may contain an unlimited number of items therein. Each item within the three levels is displayed by a representative icon. The macro level 310 has a single macro 312. The macro 312 contains two operations 322, 324 which reside at the operations level 320. When macro 312 is executed, operation 322 will be performed prior to operation 324.

Operation 322 has one associated parameter 332 which resides at the parameters level 330; operation 324 has two parameters 334, 336.

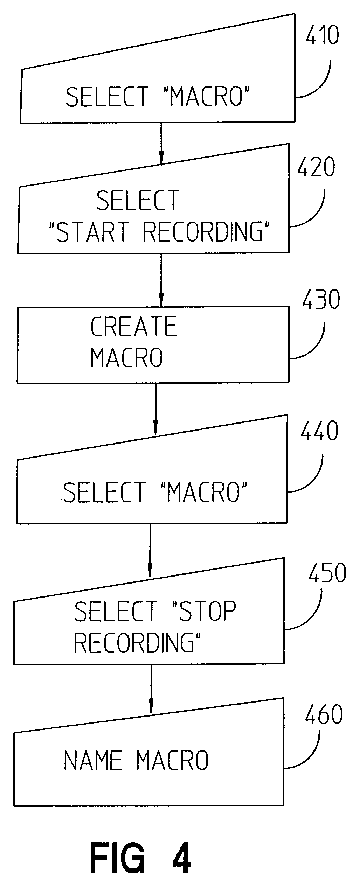

FIG. 4 shows a flow diagram of a preferred method for creating a macro. The operator (not shown) first selects "Macro" 410 from the menubar of management system. This action will display a pop-up menu from which the operator selects "Start Recording" 420. Start Recording 420 will initiate a systems program which records each subsequent action taken by the operator in the order the action was taken. In other words, operator keystrokes are stored in a buffer using a first-in-first-out scheme. Once Start Recording 420 has been selected, the creation of the macro begins. The operator creates the macro 430 by selecting those operations and associated parameters which the operator wants included in the macro (see FIG. 4 and associated discussion). After the final operation and associated parameters have been selected, the operator again selects "Macro" from the system menubar 440 and selects "Stop Recording" 450 which closes the macro. The system will then prompt the operator for a name for the macro 460 just created.

The information within each macro (i.e., operations and associated parameters) is grouped and displayed hierarchically, with the macro itself appearing at a first level. As Start Recording 420 collects the operator keystrokes in the buffer, the macro is being created top-down. Therefore, the operation selected first, along with its necessary parameters, will appear first. The macro selected second will appear second, and so on. Operations are grouped at a second level, while parameters are grouped at a third level.

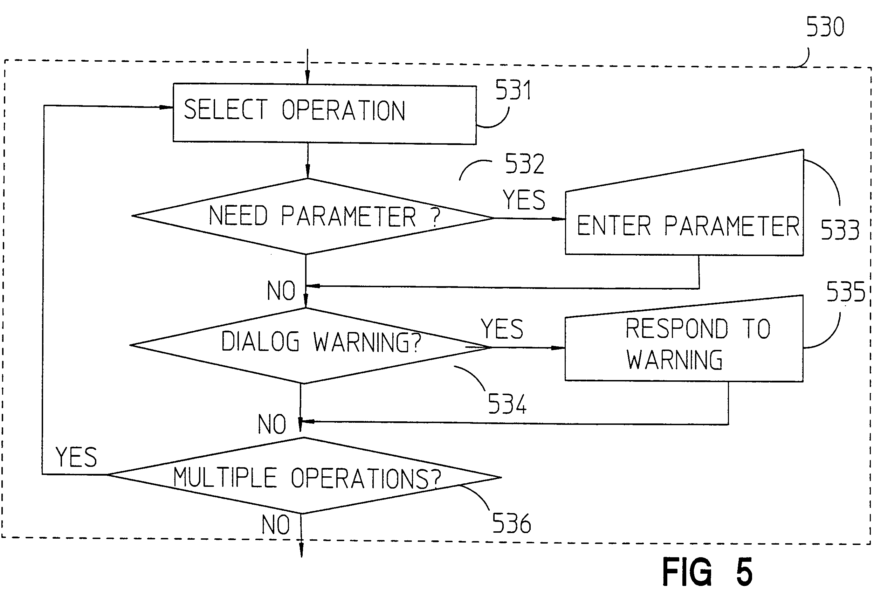

FIG. 5 shows a flow diagram of the method for creating the macro. Item 530 is the same exact block as the create macro block of FIG. 3 (see item 330). The operator first selects an operation 531. This operation may be any of the system operations included within the data management system, such as initiate tape drive. If the operation requires a parameter 532, the system will prompt the operator with a dialog box. The operator may then enter the parameter 533. If no parameter is needed 532 then macro creation continues. A system warning might be displayed 534 if the operator has selected an operation 531 or entered a parameter 533 that triggers such a warning. Some warnings require operator response. This will be accomplished with an interactive dialog which can accept operator input 535. The operator may then continue to add operations to the macro 536 by repeating the process, or exit the create macro block 530.

While the present invention has been illustrated and described in connection with the preferred embodiment, it is not to be limited to the particular structure shown. It should be understood by those skilled in the art that various changes and modifications may be made within the purview of the appended claims without departing from the spirit and scope of the invention in its broader aspects.

## Claims

1. A method of creating macros in a computer system that includes a display screen (142) having a window, the method comprising the computer-implemented steps of:
(1) initiating (420) a recording function (230);
(2) storing user-entered keystrokes (531, 533, 535) with the recording function into a data buffer (232), the keystrokes being stored in a predetermined order;
(3) terminating (450) the recording function;
(4) creating (430, 440, 450) a macro (310) with the stored keystrokes; and
(5) displaying the macro to the window in the predetermined order.

2. A system (200) for creating and displaying a hierarchical group of macros, the system comprising:
first means (230, 232) for recording user-entered keystrokes;
second means (230, 232) for creating macros using the first means, the second means including link means (240, 242) for addressing a device (244, 246, 248); and
third means (225) for displaying macros (310) created by the second means in a hierarchical manner.
